# EUROPÄISCHE PATENTSCHRIFT

(11) **EP 4 275 946 B1**
(45) Veröffentlichungstag und Bekanntmachung des Hinweises auf die Patenterteilung: **29.01.2025**
(21) Anmeldenummer: 23162135.0
(22) Anmeldetag: 15.03.2023
(51) Int. Cl.: B60L 50/51, B60L 50/61

(54) **MOBILE ARBEITSMASCHINE, INSBESONDERE RADLADER, MIT ZWEI ELEKTROMOTOREN**
MOBILE WORKING MACHINE, IN PARTICULAR WHEEL LOADER, WITH TWO ELECTRIC MOTORS
MACHINE DE TRAVAIL MOBILE, NOTAMMENT CHARGEUSE SUR ROUES, AVEC DEUX MOTEURS ÉLECTRIQUES

(30) Priorität: 11.05.2022 DE 102022111729
(43) Veröffentlichungstag der Anmeldung: 15.11.2023
(73) Patentinhaber: Weidemann GmbH, 34497 Korbach (DE)
(72) Erfinder: KREISELT, Marcus, 34497 Korbach (DE); GEIGER, Tom, 34225 Baunatal (DE)
(74) Vertreter: Otten, Roth, Dobler & Partner mbB Patentanwälte

(56) Entgegenhaltungen:
- WO-A1-2020/187906
- US-A1- 2020 391 582
- US-A1- 2022 025 614
- US-B2- 7 954 574

## Beschreibung

Die Erfindung betrifft eine mobile Arbeitsmaschine, insbesondere Radlader, Teleskoplader, Bagger, Dumper, Traktor oder dergleichen, mit einem Fahrzeugrahmen und mit einer Antriebseinheit zum Antreiben wenigstens eines Antriebselementes, nach dem Oberbegriff des Anspruchs 1.

### Stand der Technik

Mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebsrades, werden heutzutage meist noch mit einem flüssigen Kraftstoff betrieben. Dabei kommen heute hauptsächlich dieselgetriebene Fahrzeuge zum Einsatz. Zwischenzeitlich sind bereits elektrisch angetriebene Maschinen mit einem aufladbaren Akkumulator bzw. elektrischen Energiespeicher im Einsatz.

Üblicherweise weisen diese mobilen Arbeitsmaschinen lösbar verbindbare Arbeitswerkzeuge auf, z.B. die mittels sog. "Schnellwechslern" bzw. "Wechselplatten" gehalten bzw. gelöst werden. Vielfach sind diese Arbeitswerkzeuge an einem Hubarm, Teleskoparm oder dergleichen angeordnet. Zum Heben und/oder Senken dieser als auch die zum Teil aktiv antriebbaren Werkzeuge wie Greifschaufel, Kehrbesen etc. werden bei sog. "vollelektrischen" Maschinen diese elektrisch und bei sog. "hybriden" Maschinen diese Komponenten mittels einem hydraulischen System betrieben.

In der DE 20 2014 000 738 U1 ist eine derartige Arbeitsmaschine beschrieben, wobei hier ein elektrischer Arbeitsmotor bzw. E-Motor eine Hydraulikpumpe antriebt, um das hydraulische Werkzeug betrieben zu können. Ein zweiter, zentraler E-Motor treibt hier mittels einem Verteilergetriebe die Antriebs-/Laufräder bzw. die Hinter-/Vorderachsen an. Alternativ kommt heutzutage auch ein zentraler E-Antrieb mit hydraulischer Wandlung und hydraulischen Radnabenantrieb zum Einsatz.

Um bislang möglichst drehmomentstarke bzw. teure E-Motoren zu vermeiden ist eine gewisse Mindestübersetzung zwischen E-Motor und Laufrad und somit ein zusätzliches Getriebe notwendig.

Auch ist nachteilig bei bisher bekannten mobilen Arbeitsmaschinen, dass neben dem Getriebe zudem eine Gelenkwelle eingesetzte werden muss, diese sind vergleichsweise schwer, benötigen viel Platz und haben eine nachteilige Bauhöhe zur Folge. Die zuvor genannte hydraulische Alternative ermöglicht zwar eine niedrigere Bauhöhe, hat allerdings systembedingt einen schlechteren Wirkungsgrad.

In den Druckschriften US 2020/0391582 A1 und WO 2020/187906 A1 sind Arbeitsmaschinen mit zwei Elektromotoren bereits bekannt.

### Aufgabe und Vorteile der Erfindung

Aufgabe der Erfindung ist es demgegenüber, eine mobile Arbeitsmaschine, insbesondere Radlader, Teleskoplader, Bagger, Dumper, Traktor oder dergleichen, vorzuschlagen, die wenigstens teilweise die Nachteile des Standes der Technik verbessert, insbesondere eine Optimierung des Fahrzeugschwerpunktes und/oder der Gewichtsverteilung und/oder ein Antriebssystem mit neuartigen Bedriebsmodi zu realisieren.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend umfasst eine erfindungsgemäße, mobile Arbeitsmaschine, insbesondere Radlader, Teleskoplader, Bagger, Dumper, Traktor oder dergleichen, wenigstens einen Fahrzeugrahmen und eine Antriebseinheit zum Antreiben wenigstens eines ersten Antriebselementes und eines zweiten Antriebselementes, wie z.B. Antriebsrad/-walze und/oder Kettenfahrwerk oder Vibrationselement, wobei wenigstens ein erster Elektromotor und ein zweiter Elektromotor sowie wenigstens ein elektrischer Energiespeicher zum Speichern von elektrischer Energie zumindest für die Elektromotoren vorgesehen sind, wobei die Antriebseinheit zumindest den ersten Elektromotor umfasst, wobei wenigstens eine Kontrolleinheit zur elektrischen und/oder elektronischen Kontrolle der Elektromotoren und/oder des Energiespeichers vorgesehen ist, wobei wenigstens eine Werkzeughaltevorrichtung zum Halten eines Arbeitswerkzeugs vorgesehen ist und/oder wobei die Antriebseinheit wenigstens einen vom Elektromotor angetriebenen hydrostatischen Antriebsmotor zum Antreiben des Antriebselementes und/oder des Arbeitswerkzeugs und/oder der Werkzeughaltevorrichtung umfasst, wobei insbesondere die Werkzeughaltevorrichtung wenigstens eine um eine Schwenkachse verschwenkbare Tragvorrichtung, z.B. Hubarm und/oder Teleskopausleger und/oder Dreipunkt-Hebevorrichtung, umfasst und dass die Antriebseinheit zumindest den ersten Elektromotor zum Antreiben des ersten Antriebselementes und den zweiten Elektromotor zum Antreiben des zweiten Antriebselementes umfasst, wobei das erste Antriebselement an einer Vorderachse der Arbeitsmaschine und das zweite Antriebselement an einer Hinterachse der Arbeitsmaschine angeordnet sind. So kann in vorteilhafter Weise ein Vorderrad- oder Hinterrad- oder AllradAntrieb realisiert werden. Hierbei ist ein Verteilergetriebe zwischen bzw. zum Verbinden der Vorder- und Hinterachse wie beim Stand der Technik entbehrlich. Dies reduziert den Aufwand sowie Kosten und Gewicht.

So sind der erste Elektromotor und der zweite Elektromotor als Antrieb für die Arbeitsmaschine verwendbar. Dies stellt eine Abkehr von bisher weit verbreiteten Systemen dar, wobei ein erster Elektromotor als Antrieb für die Antriebsräder/-ketten vorgesehen war und als zweiter Elektromotor lediglich als sog. Starter für einen Verbrennungsmotor oder für das Hydrauliksystem bzw. für das Arbeitswerkzeug vorhanden war, die jedoch nicht für den Antrieb bzw. das Fahren der Arbeitsmaschine verwendbar sind.

Mit Hilfe der zwei Elektro-Antriebsmotoren können vollkommen neuartige Bedriebsmodi verwirklicht werden. Beispielsweise wird der erste Elektromotor mit einer anderen Motorleistung und/oder einem andern Motordrehmoment als der zweite Elektromotor betrieben und/oder einzeln, insb. zu unterschiedlichen Zeiten bzw. in unterschiedlichen Betriebsphasen, oder in Kombination miteinander, insb. gleichzeitig, betrieben.

Beispielsweise weist der erste Elektromotor eine erste Motorleistung und ein erstes Motordrehmoment und ein erstes Motorvolumen auf, wobei der zweite Elektromotor eine zweite Motorleistung und ein zweites Motordrehmoment und ein zweites Motorvolumen aufweist, und wobei die erste Motorleistung kleiner oder größer als die zweite Motorleistung ist und/oder das erste Motordrehmoment kleiner oder größer als das zweite Motordrehmoment ist und/oder das erste Motorvolumen kleiner oder größer als das zweite Motorvolumen ist. Durch diese vorteilhafte Unterschiedlichkeit der beiden Antriebsmotoren ergeben sich für deren Betrieb/Einsatz, insb. mit Hilfe der Kontrolleinheit, vielfältigste, vorteilhafte Möglichkeiten der Kombinierbarkeit oder des jeweiligen Einzel-Betriebes/-Antriebes für die Arbeitsmaschine gemäß der Erfindung. Dadurch stehen u.a. drei unterschiedlichste Antriebsleistungen/-drehmomente für unterschiedlichste Arbeiten, Anwendungen etc. zur Verfügung, nämlich z.B. eine kleinere oder eine größere und eine addierte bzw. kombinierte Antriebsleistung. Dementsprechend Energieeffizient und verbrauchsgünstig kann die Arbeitsmaschine betrieben werden.

Grundsätzlich können die beiden Antriebsmotoren direkt, d.h. ohne Getriebe/Übersetzung an das jeweilige Antriebselement bzw. Antriebsrad angeordnet/angebracht bzw. montiert werden. Dies spart Bauraum und Kosten. Vorteilhafterweise sind am ersten Elektromotor wenigstens eine erste Getriebeeinheit mit einem ersten, eine erste Antriebsdrehzahl aufweisenden Antrieb des ersten Elektromotors und einem ersten, eine erste Abtriebsdrehzahl aufweisenden Abtrieb vorgesehen und/oder sind am zweiten Elektromotor wenigstens eine zweite Getriebeeinheit mit einem zweiten, eine zweite Antriebsdrehzahl aufweisenden Antrieb des zweiten Elektromotors und einem zweiten, eine zweite Abtriebsdrehzahl aufweisenden Abtrieb vorgesehen. Hierdurch kann in vorteilhafter Weise eine Wandlung des Drehmomentes und/oder der Drehzahl umgesetzt werden. Dies ist gerade bei schweren Arbeiten von großem Vorteil, bei denen sehr hohe Drehmomente benötigt werden. So können die Elektromotoren entsprechend kleiner und wirtschaftlich besonders günstig dimensioniert werden. Trotzdem kann ein hohes Drehmoment der Arbeitsmaschine zur Verfügung gestellt werden. Beispielsweise ist die erste Abtriebsdrehzahl des ersten Abtriebs der ersten Getriebeeinheit kleiner oder größer als die zweite Abtriebsdrehzahl des zweiten Abtriebs und/oder ein erstes Drehmoment des ersten Abtriebs der ersten Getriebeeinheit kleiner oder größer als ein zweites Drehmoment des zweiten Abtriebs.

In einer vorteilhaften Variante der Erfindung umfasst die Antriebseinheit und/oder eine erste/zweite Antriebswirkkette wenigstens die erste und/oder zweite Getriebeeinheit, wobei die erste Getriebeeinheit, insb. innerhalb der ersten Antriebswirkkette, wenigstens zwischen dem ersten Elektromotor und dem ersten Antriebselement angeordnet ist, so dass eine erste Antriebskraft des ersten Elektromotors, insb. innerhalb der ersten Antriebswirkkette, über die erste Getriebeeinheit auf das erste Antriebselement übertragbar ist, und/oder wobei die zweite Getriebeeinheit, insb. innerhalb der zweiten Antriebswirkkette, wenigstens zwischen dem zweiten Elektromotor und dem zweiten Antriebselement angeordnet ist, so dass eine zweite Antriebskraft des zweiten Elektromotors, insb. innerhalb der zweiten Antriebswirkkette, über die zweite Getriebeeinheit auf das zweite Antriebselement übertragbar ist. Hiermit können vorteilhafte Antriebswirkketten realisiert werden.

Vorteilhafterweise ist zwischen dem ersten Antriebselement und dem ersten Elektromotor wenigstens eine erste Kupplungseinheit zum An- und Abkuppeln des ersten Elektromotors und/oder der ersten Getriebeeinheit vom ersten Antriebselement angeordnet und/oder ist zwischen dem zweiten Antriebselement und dem zweiten Elektromotor wenigstens eine zweite Kupplungseinheit zum An- und Abkuppeln des zweiten Elektromotors und/oder der zweiten Getriebeeinheit vom zweiten Antriebselement angeordnet, insb. ist wenigstens eine Betätigungsvorrichtung zum Betätigen der ersten und/oder zweiten Kupplungseinheit vorgesehen. Hiermit kann einer oder beide Elektromotoren oder Antriebselemente in vorteilhafter Weise ausgekuppelt bzw. eingekuppelt werden, so dass sich unterschiedlichste Kombinationen der Komponenten in Abhängigkeit der Arbeiten verwirklicht werden können. Dies führt zu einer besonders effizienten Betriebsweise der Arbeitsmaschine.

In einer besonderen Weiterbildung der Erfindung ist der erste Elektromotor als erste Generatoreinheit zum Generieren von elektrischer Energie ausgebildet und/oder ist der zweite Elektromotor als zweite Generatoreinheit zum Generieren von elektrischer Energie ausgebildet. So können die Elektromotor bedarfsweise als Energieerzeuger und/oder Bremse für die Arbeitsmaschine verwendet werden.

Vorteilhafterweise ist zumindest ein Sensorelement zum Erfassen wenigstens einer der Drehzahlen und/oder Erfassen einer Geschwindigkeit vorgesehen. Hiermit können in vorteilhafter Weise Parameter der Arbeitsmaschine erfasst und weiterverwendet werden, insb. mit Hilfe der Kontrolleinheit. Beispielsweise ist die Kontrolleinheit zum Betätigen der Betätigungsvorrichtung und/oder zum Betreiben der beiden Elektromotoren in Abhängigkeit einer der Drehzahlen und/oder der Geschwindigkeit ausgebildet.

In einer vorteilhaften Ausführungsform der Erfindung ist wenigstens ein Pumpenmotor zum Antreiben einer Hydraulikpumpe eines eine Hydraulikflüssigkeit umfassenden Hydrauliksystems vorgesehen, wobei insbesondere der Pumpenmotor und/oder die Hydraulikpumpe und/oder das Hydrauliksystem zum Betreiben des Arbeitswerkzeuges und/oder der Werkzeughaltevorrichtung und/oder der Tragvorrichtung ausgebildet ist. Hiermit kann neben dem elektrischen Antriebssystem zusätzlich ein Hydrauliksystem verwirklicht werden, was u.a. für die Tragvorrichtung bzw. den Hubarm und7oder die Werkzeughaltevorrichtung bzw. das Arbeitswerkzeug von großem Vorteil ist. So können z.B. bislang gebräuchliche aktive bzw. hydraulische Arbeitswerkzeuge weiterhin verwendet werden.

Darüber hinaus können in vorteilhafter Weise ein Differential und/oder ein separates Bremssystem der Arbeitsmaschine verwendet werden. Bei sog. reinen Elektro-Antrieben wird derzeit nämlich eine Rekuperation mit dem Elektro-Motor nicht als ausreichend sicher zugelassen, so dass (zusätzlich) ein separates Bremssystem vorzusehen ist. Vorteilhaft sind z.B. Bremsen, die direkt jeweils einem Antriebselement bzw. Laufrad zugeordnet und auf der jeweiligen Nabe angeordnet sind.

Beispielsweise umfasst eine mobile Arbeitsmaschine wenigstens eine in Wirkverbindung stehende Bremsreihe, insb. bestehend aus einem Bremselement der Bremseinheit und der Getriebeeinheit sowie dem wenigstens einen Antriebselement/Laufrad, wobei die Getriebeeinheit in/innerhalb der Bremsreihe wenigstens zwischen dem wenigstens einen Antriebselement/Laufrad und dem Bremselement angeordnet ist, so dass eine Bremskraft der Bremseinheit und/oder des Bremselementes über die Getriebeeinheit auf das wenigstens eine Antriebselement/Laufrad übertragbar ist. Mit Hilfe dieser vorteilhaften Bremsreihe bzw. "Bremskette" kann einerseits die Bremskraft bzw. das Bremsdrehmoment mittels der Getriebeeinheit in vorteilhafter Weise gewandelt bzw. verändert/vergrößert werden. Andererseits wird hiermit auch die Getriebeeinheit doppelt bzw. zweifach genutzt/verwendet, so dass eine Einsparung des wirtschaftlichen bzw. konstruktiven Aufwandes und zudem auch der benötigte Bauraum bzw. Platz vorteilhaft klein bzw. gering ausfallen kann.

Gerade die vorteilhafte Transformation der/des Bremskraft/ Bremsmomentes der Bremseinheit bzw. des Bremselementes mittels der Getriebeeinheit, so dass eine vergleichsweise große Bremskraft bzw. Bremsmoment auf das Laufrad und somit ein vergleichsweise starkes/kräftiges Bremsen der mobilen Arbeitsmaschine wie ein Radlader oder dergleichen verwirklicht werden kann, ermöglicht eine besonders klein dimensionierte und kostengünstige Bremseinheit bzw. Bremselement.

Es ist jedoch grundsätzlich auch denkbar, dass die Bremseinheit in vorteilhafter Weise quasi "seriell" bzw. "in Reihe" mit/zum E-Motor an der Getriebeeinheit angeordnet bzw. betrieben werden. So ist räumlich und/oder in der Wirkkette bzw. Wirkverbindung betrachtet in diesem denkbaren Fall der E-Motor zwischen Bremseinheit und Getriebeeinheit oder alternativ die Bremseinheit zwischen dem E-Motor und der Getriebeeinheit angeordnet/eingebunden.

In einer vorteilhaften Variante der Erfindung ist eine in Wirkverbindung stehende Antriebsreihe, bestehend aus dem Elektromotor und der Getriebeeinheit sowie dem wenigstens einen Antriebslaufrad, vorgesehen, wobei innerhalb der Antriebsreihe die Bremseinheit zwischen Elektromotor und Differentialeinheit oder dem wenigstens einen Antriebslaufrad angeordnet ist. Dies ist u.a. besonders kostengünstig und platzsparend umsetzbar.

Vorteilhaftweise ist die Antriebsdrehzahl des Antriebs der Getriebeeinheit größer als die Abtriebsdrehzahl des Abtriebs, so dass die Getriebeeinheit eine Untersetzung aufweist. Die hiermit realisierte vorteilhafte Transformation der/des Bremskraft/ Bremsmomentes der Bremseinheit bzw. des Bremselementes mittels der Getriebeeinheit generiert eine vergleichsweise große Bremskraft bzw. Bremsmoment auf das Laufrad und somit ein vergleichsweise starkes/kräftiges Bremsen mit einer relativ kleinen Bremseinheit. Die ermöglicht eine besonders kostengünstige Umsetzung der Erfindung.

Es kann in vorteilhafter Weise u.a. eine zentrale Gelenkwelle entfallen, was u.a. zu einer besonders kostengünstigen und platzsparenden Umsetzung der Erfindung führt kann.

Vorzugsweise umfasst die Antriebseinheit wenigstens die Getriebeeinheit, wobei die Getriebeeinheit wenigstens zwischen dem Elektromotor und dem Antriebslaufrad angeordnet ist, so dass eine Antriebskraft des Elektromotors über die Getriebeeinheit auf das wenigstens eine Antriebslaufrad übertragbar ist. Dies ermöglicht eine besonders vorteilhafte Antriebskette bzw. Wirkverbindung der relevantesten Antriebskomponenten.

In einer bevorzugten Variante der Erfindung erfolgt die Energieversorgung des Elektromotors der Achse bzw. des Fahrantriebes und insbesondere der ganzen Arbeitsmaschine und damit auch ggf. des (aktiven) Werkzeuges und des oftmals vorhandenen Hubarmes, Teleskoparmes, Hebevorrichung oder dergleichen aus dem elektrischen Energiespeicher bzw. Akku erfolgt.

In einer besonderen Ausführungsform der Erfindung ist wenigstens ein Pumpenmotor zum Antreiben einer Hydraulikpumpe eines eine Hydraulikflüssigkeit umfassenden Hydrauliksystems vorgesehen. Hiermit kann eine vorteilhafte hybride Betriebsweise mit z.B. einem elektrischer Fahr-Antrieb der Arbeitsmaschine oder einem E-Motor als Wandler der elektrischen Energie des elektrischen Energiespeichers mit von diesem angetriebener Hydraulikpumpe, die einen Hydraulik-Fahrantrieb/-Motor antreibt, und/oder ein hydraulisches Betreiben des Werkzeuges und/oder der verstellbaren/drehbaren/beweglichen Tragvorrichtung wie z.B. eines Hubarmes, Teleskoparmes oder dergleichen verwirklicht werden.

Bei Letzterem ist in vorteilhafter Weise der Pumpenmotor und/oder die Hydraulikpumpe und/oder das Hydrauliksystem zum Betreiben des Arbeitswerkzeuges und/oder der Werkzeughaltevorrichtung und/oder der Tragvorrichtung ausgebildet. Somit können die Vorteile einer hydraulischen Betriebsweise der Tragvorrichtung bzw. des Hubarmes, Teleskoparmes etc. und/oder eines hydraulischen, aktiven Werkzeuges wie eines Greifarmes etc. mit einem E-Antrieb der mobilen Arbeitsmaschine gemäß der Erfindung in vorteilhafter Weise kombiniert werden.

Beispielsweise weist die mobile Arbeitsmaschine eine vorteilhafte Lenkung bzw. Verstellbarkeit der einzelnen Laufräder, um z.B. eine Allradlenkung der Arbeitsmaschine zu verwirklichen. Vorzugsweise ist wenigstens eine Knick-Lenkung vorgesehen. Hierdurch kann auf die gerade bei Radladern bewährte Knicklenkung bzw. auf bisher handelsübliche Fahrzeugrahmen bzw. Karosserien zurückgegriffen werden, was sich vorteilhaft auf die Kosten und die Betriebsweise/-kosten auswirkt.

Generell ist von Vorteil, z.B. wenigstens einen der beiden Elektro-Motoren abkoppelbar ausbilden, z.B. mit einer elektromagnetischen oder hydraulischen Kupplung. So können u.a. Energieverluste über den zweiten bzw. abgeschalteten Motor zu verringern. Vorteilhafterweise sollte zumindest möglichst derjenige Motor abgeschaltet werden können, der für langsame Geschwindigkeiten dimensioniert bzw. vorgesehen ist. So kann z.B. eine hohe Endgeschwindigkeit erreicht werden, ohne dass insb. der Motor für langsame Fahrgeschwindigkeiten bzw. mit hohen Drehmomenten mitgeschleppt werden muss. Der zweite Motor für höhere Fahrgeschwindigkeiten kann gegebenenfalls auch eine Kupplung aufweisen, so dass dieser auch bei langsamer Fahr den zweiten Motor unterstützen kann.

Beispielsweise kann an einer vorderen Achse ein Motor mit hohem Drehmoment vorgesehen werden, insb. mit einer höheren Übersetzung an der Vorderachse. Das hohe Drehmoment ist gerade an der Vorderachse von großem Vorteil, um z.B. beim Einfahren in ein Haufwerk oder dergleichen viel Schubkraft zu haben, um das Werkzeug bzw. die Schaufel zu füllen. An der Hinterachse kann entsprechend ein Motor mit niedrigerem Drehmoment bzw. niedrigerer Übersetzung vorgesehen werden. Hierdurch ergeben sich üblicherweise auch unterschiedliche (maximale) Drehzahlen der Motoren. Bei schneller Fahrt kann dann der schneller drehende Motor abgekoppelt werden, um die Komponenten vor Schaden zu schützen.

Generell können die Elektromotoren in vorteilhafter Weise auf unterschiedliche Betriebspunkte optimiert bzw. ausgelegt werden. Somit ergibt sich für jeden Motor ein Punkt mit optimalem Wirkungsgrad, in dem dieser nach Möglichkeit betrieben werden kann.

Vorteilhafterweise ist eine elektronische Steuerung bzw. Kontrolle vorgesehen, die u.a. verschiedene Parameter überwacht und die Motoren in vorteilhafter Weise ansteuert. Zum Beispiel könnte überwacht werden:
- die Drehzahlen der Elektromotoren und/oder
- eine Stromaufnahme der Motoren und/oder
- eine Rekuperation der Motoren bzw. ein generierter Strom und/oder
- eine Temperatur, z.B. zur Schonung eines Motors, wenn dessen Temperatur zu hoch ist und dieser deshalb nicht angesteuert werden sollte/darf, und/oder
- die Geschwindigkeit der Arbeitsmaschine bzw. des Fahrzeugs und/oder die Geschwindigkeit des Endabtriebs, z.B. über einen Sensor im Vorgelege einer Achse.

Die Steuerung bzw. Kontrolle/Überwachung kann so ausgelegt werden, dass möglichst eine optimale Nutzung der beiden Motoren erreicht wird. Beispielsweise kann die Steuerung bzw. Kontrolle/Überwachung mit Hilfe eines Kennfelds oder dergleichen die Motoren ansteuern.

Vorteilhafterweise wird ein Straßenmodus bzw. Schnellgang vorgesehen. Hiermit kann eine hohe Endgeschwindigkeit und/oder eine Nutzung des Motors mit niedrigerem Übersetzungsverhältnis realisiert werden, z.B. zum Anfahren können beide Motoren genutzt werden, um ein hohes Drehmoment zu erreichen.
Ein vorteilhafter Arbeitsmodus bzw. Kriechgang kann ebenfalls vorgesehen werden. So kann eine Nutzung beider Motoren hier von besonderem Vorteil sein, um möglichst eine optimale Traktion zu erreichen. Hierfür kann alternativ auch eine Nutzung des Motors mit hohem Übersetzungsverhältnis vorgesehen werden.

Ein vorteilhaftes Umschalten zwischen unterschiedlichen Betriebsmodi kann entweder automatisch erfolgen, z.B. unter einer vorgegebenen Fahr-Geschwindigkeit kann die Nutzung des Arbeitsmodus automatisch erfolgen. Über dieser Grenzgeschwindigkeit kann (automatisch) ein Wechsel in den Schnell- bzw. Straßenmodus verwirklicht werden. Alternativ oder in Kombination hierzu kann auch eine (manuelle) Umschaltung bzw.

Vorwahl durch den Nutzer erfolgen. Typischerweise erfolgt die Umschaltung bei ca. 7-15 km/h.

Beispielsweise kann ein Einschalten/Einklinken eines zuvor abgeschalteten Motors verwirklicht werden, wenn z.B. die Bremse aktiviert wird und/oder der Fahrer vom sog. "Gaspedal" geht. Wenn z.B. der Motor mit höherer Übersetzung zuvor ausgeschalten war, ergibt sich nun die Möglichkeit mehr Energie zu rekuperieren und somit Energie effizienter zu fahren/arbeiten.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Ansicht einer mobilen Arbeitsmaschine mit Fahrerkabine, Fahrzeugrahmen und Energiespeicher gemäß der Erfindung,
- Figur 2: eine schematische Draufsicht auf den Fahrzeugrahmen mit zwei elektrischen Antriebsmotoren der mobilen Arbeitsmaschine gemäß Figur 1 und
- Figur 3: eine schematische, perspektivische Ansicht auf den Fahrzeugrahmen der mobilen Arbeitsmaschine gemäß Figur 1 und ohne Fahrerkabine.

In den Figuren ist eine mobile Arbeitsmaschine 1 mit einer Fahrerkabine 2, einem Fahrzeugrahmen 3 und einem Energiespeicher 4 bzw. einer Traktionsbatterie 4 in der Ausführung als sog. Teleskoplader mit einem Teleskoparm 6 und vier lenkbaren Laufrädern 5 schematisch dargestellt, d.h. mit einer Allradlenkung. Der Energiespeicher 4 bzw. die Traktionsbatterie 4 versorgt zwei Elektromotoren 7, die mittels je eines Übersetzungsgetriebes 8 die Laufräder 5 antreibt.

Die Elektromotoren 7 sind vorzugsweise jeweils mittels einer Kupplung 22 je mit einer zugeordneten Achse 25 verbunden, womit die Laufräder 5 antreibbar sind. Wahlweise können hierdurch die angetriebenen Laufräder 5 als Vorderräder oder als Hinterräder angetrieben werden, insb. für einen Vorderrad- oder Hinterrad- oder Allradantrieb.

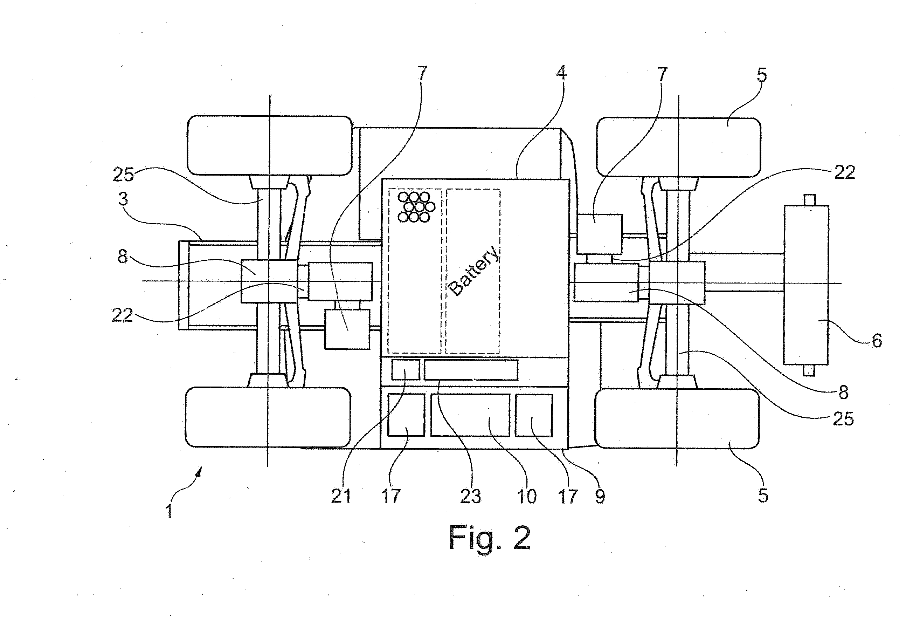

Lediglich symbolisch ist in Figur 2 eine Hydraulikpumpe bzw. ein Hydrauliksystem 10 abgebildet, um zu zeigen, dass z.B. der Teleskoparm 6 mittels Hydraulikenergie verstellt bzw. angehoben und ein-/ausgefahren werden kann. Derartige Hydrauliksysteme sind jedoch allgemein bekannt.

Der Energiespeicher 4 bzw. ein Speichergehäuse 9 ist unten am Tragrahmen 3 angeordnet bzw. fixiert, wobei hier eine Platte 11 unterhalb des Gehäuses 9 bzw. Energiespeichers 4 am Fahrzeugrahmen 3 fixiert wird, insb. lösbar fixiert, z.B. mittels Schrauben. Vorteilhafterweise ist eine Dämpfung 18 zum Dämpfen des Energiespeichers 4 bzw. die Traktionsbatterie 4 vorgesehen, womit Erschütterungen abgefedert/gedämpft werden können. Zugleich ist das Gehäuse 9 auch als Schutz gegen Schmutz und Wasser vorgesehen.

Der Energiespeicher 4 bzw. die Traktionsbatterie 4 umfasst weiterhin einen Inverter 20 und/oder eine Elektronik-Einheit 12 und/oder ein sog. Batterie-Management-System (BMS) 21, das zur Kontrolle der Entladung und Ladung des Energiespeichers 4 bzw. der Traktionsbatterie 4 vorgesehen ist.

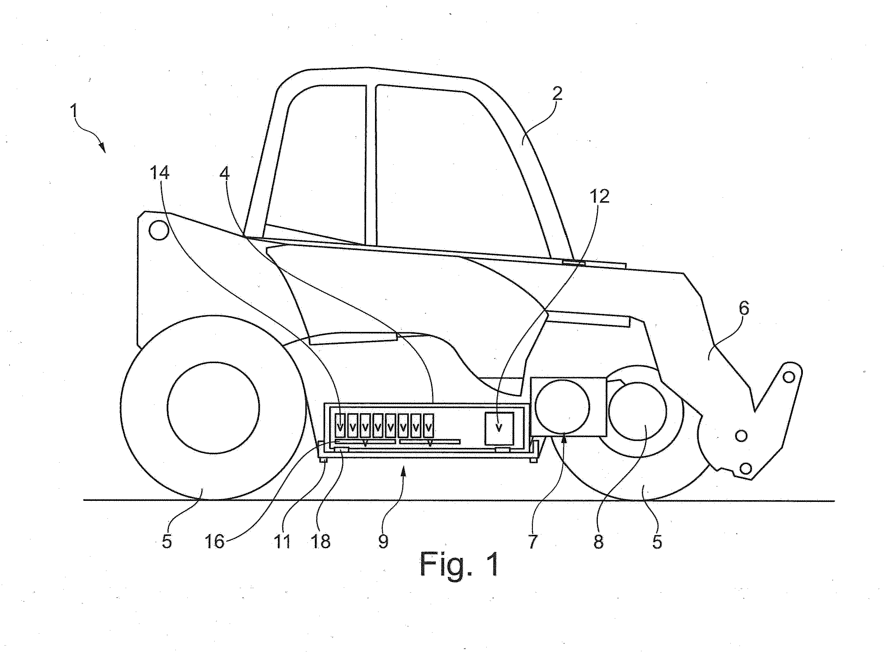

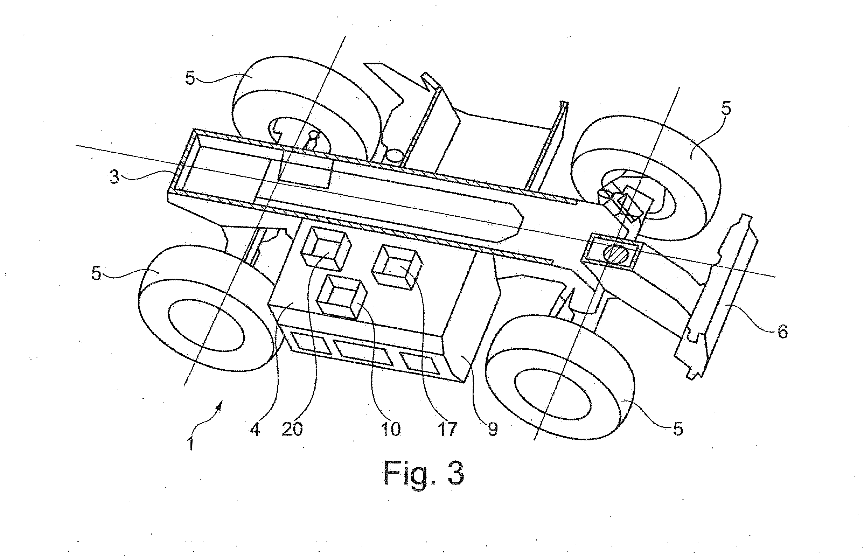

Der Energiespeicher 4 bzw. die Traktionsbatterie 4 weisen zahlreiche Batteriezellen 14 auf (vgl. in Figur 1 und 3 angedeutet), die innerhalb von hier im vorliegenden Ausführungsbeispiel 2 Batteriemodulen 13 angeordnet sind. Die Batteriezellen 14 sind innerhalb des Gehäuses 9 bzw. Energiespeichers 4 alle auf einer gemeinsamen Ebene 15 angeordnet. Unterhalb der Zellen 14 und oberhalb bzw. innerhalb des Gehäuses 9 ist eine Flüssigkeitskühlung 16 und eine Dämpfung 18 bzw. Dämpfungselemente 18 vorgesehen.

Darüber hinaus können innerhalb des Gehäuses 9 bzw. des Energiespeichers 4 bzw. der Traktionsbatterie 4 zudem noch ein Charger bzw. Ladeeinheit, ein Klimakompressor ein oder mehrere DC/AC-Wandler 17 und/oder eine Absicherung 23 und/oder ein Inverter etc. vorhanden sein.

## Patentansprüche

1. Mobile Arbeitsmaschine (1), insbesondere Radlader, Teleskoplader, Bagger, Dumper, Traktor oder dergleichen, mit einem Fahrzeugrahmen (3) und mit einer Antriebseinheit zum Antreiben wenigstens eines ersten Antriebselementes (5) und eines zweiten Antriebselementes (5), wie z.B. Antriebsrad/-walze und/oder Kettenfahrwerk oder Vibrationselement, wobei wenigstens ein erster Elektromotor (7) und ein zweiter Elektromotor (7) sowie wenigstens ein elektrischer Energiespeicher (4) zum Speichern von elektrischer Energie zumindest für die Elektromotoren (7) vorgesehen sind, wobei die Antriebseinheit zumindest den ersten Elektromotor (7) umfasst, wobei wenigstens eine Kontrolleinheit (12, 17, 20) zur elektrischen und/oder elektronischen Kontrolle der Elektromotoren (7) und/oder des Energiespeichers (4) vorgesehen ist, wobei wenigstens eine Werkzeughaltevorrichtung (6) zum Halten eines Arbeitswerkzeugs vorgesehen ist und/oder wobei die Antriebseinheit wenigstens einen vom Elektromotor (7) angetriebenen hydrostatischen Antriebsmotor zum Antreiben des Antriebselementes und/oder des Arbeitswerkzeugs und/oder der Werkzeughaltevorrichtung (6) umfasst, wobei insbesondere die Werkzeughaltevorrichtung (6) wenigstens eine um eine Schwenkachse verschwenkbare Tragvorrichtung, z.B. Hubarm und/oder Teleskopausleger und/oder Dreipunkt-Hebevorrichtung, umfasst, wobei die Antriebseinheit zumindest den ersten Elektromotor (7) zum Antreiben des ersten Antriebselementes (5) und den zweiten Elektromotor (7) zum Antreiben des zweiten Antriebselementes (5) umfasst, **dadurch gekennzeichnet, dass** das erste Antriebselement (5) an einer Vorderachse (25) der Arbeitsmaschine (1) und das zweite Antriebselement (5) an einer Hinterachse (25) der Arbeitsmaschine (1) angeordnet sind.

2. Arbeitsmaschine nach Anspruch 1, **dadurch gekennzeichnet, dass** der erste Elektromotor (7) eine erste Motorleistung und ein erstes Motordrehmoment und ein erstes Motorvolumen aufweist und dass der zweite Elektromotor (7) eine zweite Motorleistung und ein zweites Motordrehmoment und ein zweites Motorvolumen aufweist, wobei die erste Motorleistung kleiner oder größer als die zweite Motorleistung ist und/oder das erste Motordrehmoment kleiner oder größer als das zweite Motordrehmoment ist und/oder das erste Motorvolumen kleiner oder größer als das zweite Motorvolumen ist.

3. Arbeitsmaschine nach einem der vorgenannten Ansprüche, **dadurch gekennzeichnet, dass** am ersten Elektromotor (7) wenigstens eine erste Getriebeeinheit (8) mit einem ersten, eine erste Antriebsdrehzahl aufweisenden Antrieb des ersten Elektromotors (7) und einem ersten, eine erste Abtriebsdrehzahl aufweisenden Abtrieb vorgesehen sind und/oder dass am zweiten Elektromotor (7) wenigstens eine zweite Getriebeeinheit (8) mit einem zweiten, eine zweite Antriebsdrehzahl aufweisenden Antrieb des zweiten Elektromotors (7) und einem zweiten, eine zweite Abtriebsdrehzahl aufweisenden Abtrieb vorgesehen sind.

4. Arbeitsmaschine nach Anspruch 3, **dadurch gekennzeichnet, dass** die erste Abtriebsdrehzahl des ersten Abtriebs der ersten Getriebeeinheit (8) kleiner oder größer als die zweite Abtriebsdrehzahl des zweiten Abtriebs der zweiten Getriebeeinheit (8) ist.

5. Arbeitsmaschine nach einem der Ansprüche 3 oder 4, **dadurch gekennzeichnet, dass** ein erstes Drehmoment des ersten Abtriebs der ersten Getriebeeinheit (8) kleiner oder größer als ein zweites Drehmoment des zweiten Abtriebs der zweiten Getriebeeinheit (8) ist.

6. Arbeitsmaschine nach einem der Ansprüche 3 bis 5, **dadurch gekennzeichnet, dass** die Antriebseinheit wenigstens die erste und/oder zweite Getriebeeinheit (8) umfasst, wobei die erste Getriebeeinheit (8) wenigstens zwischen dem ersten Elektromotor (7) und dem ersten Antriebselement (5) angeordnet ist, so dass eine erste Antriebskraft des ersten Elektromotors (7) über die erste Getriebeeinheit (8) auf das erste Antriebselement (5) übertragbar ist, und/oder wobei die zweite Getriebeeinheit (8) wenigstens zwischen dem zweiten Elektromotor (7) und dem zweiten Antriebselement (5) angeordnet ist, so dass eine zweite Antriebskraft des zweiten Elektromotors (7) über die zweite Getriebeeinheit (8) auf das zweite Antriebselement (5) übertragbar ist.

7. Arbeitsmaschine nach einem der vorgenannten Ansprüche, **dadurch gekennzeichnet, dass** zwischen dem ersten Antriebselement (5) und dem ersten Elektromotor (7) wenigstens eine erste Kupplungseinheit (22) zum An- und Abkuppeln des ersten Elektromotors (7) und/oder der ersten Getriebeeinheit (8) vom ersten Antriebselement (5) angeordnet ist und/oder dass zwischen dem zweiten Antriebselement (5) und dem zweiten Elektromotor (7) wenigstens eine zweite Kupplungseinheit (22) zum An- und Abkuppeln des zweiten Elektromotors (7) und/oder der zweiten Getriebeeinheit (8) vom zweiten Antriebselement (5) angeordnet ist.

8. Arbeitsmaschine nach einem der vorgenannten Ansprüche, **dadurch gekennzeichnet, dass** wenigstens eine Betätigungsvorrichtung zum Betätigen der ersten und/oder zweiten Kupplungseinheit (22) vorgesehen ist.

9. Arbeitsmaschine nach einem der vorgenannten Ansprüche, **dadurch gekennzeichnet, dass** der erste Elektromotor (7) als erste Generatoreinheit zum Generieren von elektrischer Energie ausgebildet ist und/oder dass der zweite Elektromotor (7) als zweite Generatoreinheit zum Generieren von elektrischer Energie ausgebildet ist.

10. Arbeitsmaschine nach einem der vorgenannten Ansprüche, **dadurch gekennzeichnet, dass** zumindest ein Sensorelement zum Erfassen wenigstens einer der Drehzahlen und/oder Erfassen einer Geschwindigkeit vorgesehen ist.

11. Arbeitsmaschine nach einem der vorgenannten Ansprüche, **dadurch gekennzeichnet, dass** die Kontrolleinheit (12, 17, 20) zum Betätigen der Betätigungsvorrichtung in Abhängigkeit einer der Drehzahlen und/oder der Geschwindigkeit ausgebildet ist.

12. Arbeitsmaschine nach einem der vorgenannten Ansprüche, **dadurch gekennzeichnet, dass** wenigstens ein Pumpenmotor (10) zum Antreiben einer Hydraulikpumpe eines eine Hydraulikflüssigkeit umfassenden Hydrauliksystems vorgesehen ist, wobei insbesondere der Pumpenmotor (10) und/oder die Hydraulikpumpe und/oder das Hydrauliksystem zum Betreiben des Arbeitswerkzeuges und/oder der Werkzeughaltevorrichtung (6) und/oder der Tragvorrichtung ausgebildet ist.

13. Verfahren zum Betreiben einer Arbeitsmaschine nach einem der vorgenannten Ansprüche, **dadurch gekennzeichnet, dass** der der erste Elektromotor (7) und der zweite Elektromotor (7) als Antrieb (7) für die Arbeitsmaschine (1)verwendet werden, wobei insbesondere der erste Elektromotor (7) mit einer anderen Motorleistung und/oder einem andern Motordrehmoment als der zweite Elektromotor (7) betrieben wird.

## Claims

1. Mobile working machine (1), in particular wheel loader, telescopic loader, digger, dumper, tractor or the like, having a vehicle frame (3) and having a drive unit for driving at least one first drive element (5) and one second drive element (5), e.g. drive wheel/roller and/or crawler track or vibration element, wherein at least one first electric motor (7) and one second electric motor (7) and at least one electrical energy store (4) for storing electrical energy at least for the electric motors (7) are provided, wherein the drive unit comprises at least the first electric motor (7), wherein at least one control unit (12, 17, 20) for electrically and/or electronically controlling the electric motors (7) and/or the energy store (4) is provided, wherein at least one tool-holding device (6) for holding a working tool is provided, and/or wherein the drive unit comprises at least one hydrostatic drive motor, which is driven by the electric motor (7), for driving the drive element and/or the working tool and/or the tool-holding device (6), wherein in particular the tool-holding device (6) comprises at least one supporting device which is pivotable about a pivot axis, e.g. lifting arm and/or telescopic boom and/or three-point lifting device, wherein the drive unit comprises at least the first electric motor (7) for driving the first drive element (5) and the second electric motor (7) for driving the second drive element (5), **characterized in that** the first drive element (5) is arranged on a front axle (25) of the working machine (1) and the second drive element (5) is arranged on a rear axle (25) of the working machine (1).

2. Working machine according to Claim 1, **characterized in that** the first electric motor (7) has a first motor power and a first motor torque and a first motor volume, and **in that** the second electric motor (7) has a second motor power and a second motor torque and a second motor volume, wherein the first motor power is smaller or greater than the second motor power and/or the first motor torque is smaller or greater than the second motor torque and/or the first motor volume is smaller or greater than the second motor volume.

3. Working machine according to either of the preceding claims, **characterized in that** at least one first transmission unit (8) with a first drive of the first electric motor (7) having a first driving rotational speed and with a first output having a first output rotational speed is provided on the first electric motor (7), and/or **in that** at least one second transmission unit (8) with a second drive of the second electric motor (7) having a second driving rotational speed and with a second output having a second output rotational speed is provided on the second electric motor (7).

4. Working machine according to Claim 3, **characterized in that** the first output rotational speed of the first output of the first transmission unit (8) is smaller or greater than the second output rotational speed of the second output of the second transmission unit (8).

5. Working machine according to either of Claims 3 and 4, **characterized in that** a first torque of the first output of the first transmission unit (8) is smaller or greater than a second torque of the second output of the second transmission unit (8).

6. Working machine according to one of Claims 3 to 5, **characterized in that** the drive unit comprises at least the first and/or second transmission unit (8), wherein the first transmission unit (8) is arranged at least between the first electric motor (7) and the first drive element (5) such that a first driving force of the first electric motor (7) can be transmitted via the first transmission unit (8) to the first drive element (5), and/or wherein the second transmission unit (8) is arranged at least between the second electric motor (7) and the second drive element (5) such that a second driving force of the second electric motor (7) can be transmitted via the second transmission unit (8) to the second drive element (5).

7. Working machine according to one of the preceding claims, **characterized in that** between the first drive element (5) and the first electric motor (7) there is arranged at least one first coupling unit (22) for coupling and uncoupling the first electric motor (7) and/or the first transmission unit (8) to and/or from the first drive element (5), and/or **in that** between the second drive element (5) and the second electric motor (7) there is arranged at least one second coupling unit (22) for coupling and uncoupling the second electric motor (7) and/or the second transmission unit (8) to and/or from the second drive element (5).

8. Working machine according to one of the preceding claims, **characterized in that** at least one actuating device for actuating the first and/or the second coupling unit (22) is provided.

9. Working machine according to one of the preceding claims, **characterized in that** the first electric motor (7) is designed as a first generator unit for generating electrical energy, and/or **in that** the second electric motor (7) is designed as a second generator unit for generating electrical energy.

10. Working machine according to one of the preceding claims, **characterized in that** at least one sensor element for sensing at least one of the rotational speeds and/or for sensing a speed is provided.

11. Working machine according to one of the preceding claims, **characterized in that** the control unit (12, 17, 20) is designed for actuating the actuating device depending on one of the rotational speeds and/or the speed.

12. Working machine according to one of the preceding claims, **characterized in that** at least one pump motor (10) for driving a hydraulic pump of a hydraulic system comprising a hydraulic fluid is provided, wherein in particular the pump motor (10) and/or the hydraulic pump and/or the hydraulic system are/is designed for operating the working tool and/or the tool-holding device (6) and/or the supporting device.

13. Method for operating a working machine according to one of the preceding claims, **characterized in that** the first electric motor (7) and the second electric motor (7) are used as a drive (7) for the working machine (1), wherein in particular the first electric motor (7) is operated with a different motor power and/or a different motor torque from the second electric motor (7).

## Revendications

1. Machine de travail mobile (1), en particulier un chargeur à roues, un chargeur télescopique, une excavatrice, un tombereau, un tracteur ou similaire, comprenant un châssis de véhicule (3) et une unité d'entraînement destinée à entraîner au moins un premier élément d'entraînement (5) et un deuxième élément d'entraînement (5), tel qu'une roue/un rouleau d'entraînement et/ou un mécanisme de roulement à chenilles ou un élément vibrant, au moins un premier moteur électrique (7) et un deuxième moteur électrique (7) ainsi qu'au moins un accumulateur d'énergie électrique (4) étant prévus pour stocker de l'énergie électrique destinée au moins aux moteurs électriques (7), l'unité d'entraînement comprenant au moins le premier moteur électrique (7), au moins une unité de commande (12, 17, 20) étant prévue pour commander électriquement et/ou électroniquement les moteurs électriques (7) et/ou l'accumulateur d'énergie (4), au moins un dispositif de retenue d'outil (6) étant prévu pour maintenir un outil de travail et/ou l'unité d'entraînement comprenant au moins un moteur d'entraînement hydrostatique entraîné par le moteur électrique (7) et destiné à entraîner l'élément d'entraînement et/ou l'outil de travail et/ou le dispositif de retenue d'outil (6), le dispositif de retenue d'outil (6) comprenant en particulier au moins un dispositif de support pouvant pivoter sur un axe de pivotement, par exemple un bras de levage et/ou une flèche télescopique et/ou un dispositif de levage à trois points, l'unité d'entraînement comprenant au moins le premier moteur électrique (7) destiné à entraîner le premier élément d'entraînement (5) et le deuxième moteur électrique (7) destiné à entraîner le deuxième élément d'entraînement (5), **caractérisée en ce que** le premier élément d'entraînement (5) est disposé sur un essieu avant (25) de la machine de travail (1) et le deuxième élément d'entraînement (5) est disposé sur un essieu arrière (25) de la machine de travail (1) .

2. Machine de travail selon la revendication 1, **caractérisée en ce que** le premier moteur électrique (7) a une première puissance de moteur et un premier couple de moteur et un premier volume de moteur et **en ce que** le deuxième moteur électrique (7) a une deuxième puissance de moteur et un deuxième couple de moteur et un deuxième volume de moteur, la première puissance de moteur étant inférieure ou supérieure à la deuxième puissance de moteur et/ou le premier couple de moteur étant inférieur ou supérieur au deuxième couple de moteur et/ou le premier volume de moteur étant inférieur ou supérieur au deuxième volume de moteur.

3. Machine de travail selon l'une des revendications précédentes, **caractérisée en ce qu'**au moins une première unité de transmission (8), pourvue d'un premier entraînement du premier moteur électrique (7) ayant une première vitesse de rotation d'entraînement, et une première sortie ayant une première vitesse de rotation de sortie sont prévues sur le premier moteur électrique (7) et/ou **en ce qu'**au moins une deuxième unité de transmission (8), pourvue d'un deuxième entraînement du deuxième moteur électrique (7) ayant un deuxième vitesse de rotation d'entraînement, et une deuxième sortie ayant une deuxième vitesse de rotation de sortie sont prévues sur le deuxième moteur électrique (7).

4. Machine de travail selon la revendication 3, **caractérisée en ce que** la première vitesse de rotation de sortie de la première sortie de la première unité de transmission (8) est inférieure ou supérieure à la deuxième vitesse de rotation de sortie de la deuxième sortie de la deuxième unité de transmission (8).

5. Machine de travail selon l'une des revendications 3 ou 4, **caractérisée en ce qu'**un premier couple de la première sortie de la première unité de transmission (8) est inférieur ou supérieur à un deuxième couple de la deuxième sortie de la deuxième unité de transmission (8) .

6. Machine de travail selon l'une des revendications 3 à 5, **caractérisée en ce que** l'unité d'entraînement comprend au moins la première et/ou la deuxième unité de transmission (8), la première unité de transmission (8) étant disposée au moins entre le premier moteur électrique (7) et le premier élément d'entraînement (5), de sorte qu'une première force d'entraînement du premier moteur électrique (7) puisse être transmise au premier élément d'entraînement (5) par le biais de la première unité de transmission (8) et/ou la deuxième unité de transmission (8) étant disposée au moins entre le deuxième moteur électrique (7) et le deuxième élément d'entraînement (5) de sorte qu'une deuxième force d'entraînement du deuxième moteur électrique (7) puisse être transmise au deuxième élément d'entraînement (5) par le biais de la deuxième unité de transmission (8).

7. Machine de travail selon l'une des revendications précédentes, **caractérisée en ce qu'**au moins une première unité d'accouplement (22) destinée à accoupler et désaccoupler le premier moteur électrique (7) et/ou la première unité de transmission (8) relativement au premier élément d'entraînement (5) est disposée entre le premier élément d'entraînement (5) et le premier moteur électrique (7) et/ou qu'au moins une deuxième unité d'accouplement (22) destinée à accoupler et désaccoupler le deuxième moteur électrique (7) et/ou le deuxième réducteur (8) relativement au deuxième élément d'entraînement (5) est disposée entre le deuxième élément d'entraînement (5) et le deuxième moteur électrique (7).

8. Machine de travail selon l'une des revendications précédentes, **caractérisée en ce qu'**au moins un dispositif d'actionnement est prévu pour actionner la première et/ou la deuxième unité d'accouplement (22).

9. Machine de travail selon l'une des revendications précédentes, **caractérisée en ce que** le premier moteur électrique (7) est conçu comme une première unité génératrice destinée à générer de l'énergie électrique et/ou **en ce que** le deuxième moteur électrique (7) est conçu comme une deuxième unité génératrice destinée à générer de l'énergie électrique.

10. Machine de travail selon l'une des revendications précédentes, **caractérisée en ce qu'**au moins un élément capteur est prévu pour détecter au moins une des vitesses de rotation et/ou pour détecter une célérité.

11. Machine de travail selon l'une des revendications précédentes, **caractérisée en ce que** l'unité de commande (12, 17, 20) est conçue pour actionner le dispositif d'actionnement en fonction de l'une des vitesses de rotation et/ou de la célérité.

12. Machine de travail selon l'une des revendications précédentes, **caractérisée en ce qu'**au moins un moteur de pompe (10) est prévu pour entraîner une pompe hydraulique d'un système hydraulique comprenant un liquide hydraulique, notamment le moteur de pompe (10) et/ou la pompe hydraulique et/ou le système hydraulique étant conçus pour faire fonctionner l'outil de travail et/ou le dispositif de retenue d'outil (6) et/ou le dispositif de support.

13. Procédé de fonctionnement d'une machine de travail selon l'une des revendications précédentes, **caractérisé en ce que** le premier moteur électrique (7) et le deuxième moteur électrique (7) sont utilisés comme entraînement (7) de la machine de travail (1), en particulier le premier moteur électrique (7) fonctionnant avec une puissance de moteur différente et/ou un couple de moteur différent de ceux du deuxième moteur électrique (7).
